# EUROPEAN PATENT APPLICATION

(11) **EP 4 206 747 A1**
(43) Date of publication of application: **05.07.2023**
(21) Application number: 21861143.2
(22) Date of filing: 02.08.2021
(51) Int. Cl.: G01T 7/00

(54) **RADIATION DETECTION DEVICE**

(30) Priority: 26.08.2020 JP 2020142959
(71) Applicant: Kyocera Corporation, Kyoto-shi Kyoto 612-8501 (JP)
(72) Inventor: NOGUCHI, Noboru, Kyoto-shi, Kyoto 612-8501 (JP); NISHIOKA, Yukiya, Kyoto-shi, Kyoto 612-8501 (JP)
(74) Representative: TBK
(86) International application number: PCT/JP2021/028651
(87) International publication number: WO 2022/044715

(57) **Abstract**

A radiation detection apparatus includes a flexible substrate, a radiation detector located on the flexible substrate, a drive located on a side portion of the flexible substrate and adjacent to the radiation detector to drive the radiation detector, and a relay including a plurality of wiring layers connected to the drive. The relay is for external connection and located on an extension of the flexible substrate. The extension extends outward from the side portion. The relay may include a basal portion adjacent to the side portion. The basal portion may have a width less than a width of the side portion.

## Description

### TECHNICAL FIELD

The present disclosure relates to a radiation detection apparatus such as a flexible X-ray sensor.

### BACKGROUND OF INVENTION

A known radiation detection apparatus is described in, for example, Patent Literature 1.

### CITATION LIST

### PATENT LITERATURE

Patent Literature 1: Japanese Unexamined Patent Application Publication No. 2012-156204

### SUMMARY

In an aspect of the present disclosure, a radiation detection apparatus includes a flexible substrate, a radiation detector located on the flexible substrate, a drive located on a side portion of the flexible substrate and adjacent to the radiation detector to drive the radiation detector, and a relay located on an extension of the flexible substrate, the extension extending outward from the side portion to provide an external connection, the relay including a plurality of wiring layers connected to the drive.

### BRIEF DESCRIPTION OF THE DRAWINGS

The objects, features, and advantages of the present invention will become more apparent from the following detailed description and the drawings.
FIG. 1 is a plan view of a radiation detection apparatus according to an embodiment of the present disclosure.
FIG. 2A is a partially enlarged left side view of the radiation detection apparatus illustrated in FIG. 1.
FIG. 2B is a partially enlarged side view of a radiation detection apparatus with the structure in FIG. 2A without an upper layer on wiring layers in a relay.
FIG. 3A is a partially enlarged plan view of a basal portion of a relay in a radiation detection apparatus according to another embodiment of the present disclosure.
FIG. 3B is a partially enlarged plan view of a basal portion of a relay in a radiation detection apparatus according to another embodiment of the present disclosure.
FIG. 4A is a partially enlarged side view of a relay in a radiation detection apparatus according to another embodiment of the present disclosure.
FIG. 4B is a partially enlarged side view of a relay in a radiation detection apparatus according to another embodiment of the present disclosure.
FIG. 4C is a partially enlarged side view of a relay in a radiation detection apparatus according to another embodiment of the present disclosure.
FIG. 5 is a partially enlarged side view of a relay in a radiation detection apparatus according to another embodiment of the present disclosure.
FIG. 6A is a plan view of a radiation detection apparatus according to another embodiment of the present disclosure.
FIG. 6B is a plan view of a radiation detection apparatus according to another embodiment of the present disclosure.
FIG. 7 is a plan view of a radiation detection apparatus according to another embodiment of the present disclosure.
FIG. 8 is a plan view of a radiation detection apparatus according to another embodiment of the present disclosure.
FIG. 9 is a partially enlarged left side view of the radiation detection apparatus illustrated in FIG. 8.
FIG. 10 is a plan view of a radiation detection apparatus according to another embodiment of the present disclosure.
FIG. 11 is a plan view of a radiation detection apparatus according to another embodiment of the present disclosure.
FIG. 12A is a left side view of an example of the radiation detection apparatus illustrated in FIG. 11.
FIG. 12B is a left side view of another example of the radiation detection apparatus illustrated in FIG. 11.
FIG. 12C is a left side view of another example of the radiation detection apparatus illustrated in FIG. 11.
FIG. 12D is a left side view of another example of the radiation detection apparatus illustrated in FIG. 11.
FIG. 13 is a plan view of a radiation detection apparatus according to another embodiment of the present disclosure.
FIG. 14 is a plan view of a radiation detection apparatus according to another embodiment of the present disclosure.
FIG. 15 is a left side view of the radiation detection apparatus illustrated in FIG. 14.
FIG. 16 is a plan view of a radiation detection apparatus according to another embodiment of the present disclosure.
FIG. 17 is a plan view of a radiation detection apparatus according to another embodiment of the present disclosure.
FIG. 18 is a plan view of a radiation detection apparatus according to another embodiment of the present disclosure.

### DESCRIPTION OF EMBODIMENTS

An X-ray sensor as a radiation detection apparatus with the structure that forms the basis of a radiation detection apparatus according to the present disclosure includes an X-ray sensor panel. The X-ray sensor panel includes a glass substrate with light receivers (photoelectric converters) arranged in a matrix and circuits including a drive for outputting a signal (electric charge) generated in each light receiver, which are covered by a scintillator layer. The X-ray sensor includes the X-ray sensor panel to which known components such as a protective frame, a circuit board, and wiring are attached. The X-ray sensor is a type of imaging device that converts X-rays into visible light, and captures an image and obtains an image signal that can be displayed on a display. The X-ray sensor panel is incorporated in, for example, an X-ray apparatus.

A single X-ray panel or multiple X-ray panels to be transported and incorporated into a large radiographic imaging device, such as an X-ray apparatus, are to be flexible X-ray panels (hereafter also referred to as flexible panels), which are lightweight and convenient for transportation and are less susceptible to damage. In addition to being thin and lightweight, a flexible panel is highly less susceptible to damage than an X-ray panel including a glass substrate when being dropped or when hitting other components. A demand has thus been increasing for flexible panels in medicine, in which large radiographic imaging devices are common.

A known flexible panel is formed, for example, as described below. A polyimide (PI) resin film to be a flexible substrate (flexible board) included in a flexible panel is first formed on a glass substrate. A photoelectric conversion sensor is then formed on the flexible substrate by forming, for example, light receivers, which are photoelectric converters arranged in a matrix, and a thin-film transistor (TFT) as a switch for outputting a signal (electric charge) generated in each light receiver. This completes the body of the flexible panel. A flexible printed circuit (FPC) or a tape piece with tape-automated bonding (TAB) as an external connector is then electrically and mechanically connected to and mounted on an end of the flexible substrate with a conductive connector, or for example, an anisotropic conductive film (ACF). The external connector is externally connected to, for example, an external control circuit through a printed wiring board (PWB). The flexible substrate is finally detached from the glass substrate to complete the flexible panel with the external connector.

The flexible panel with this structure typically has a thickness of several micrometers to several hundred micrometers and thus has poor handling (handling performance) after being detached. The flexible panel often uses a support film on the back surface and a protective film on the front surface.

For an external connector such as an FPC and TAB to be connected and mounted in the structure including the completed flexible panel body, as with the known technique described above, each external connector is cut using a die from a tape reel including hundreds to thousands of external connectors. However, forming external connectors individually can decrease the production yield in mounting external connectors, increase the manufacturing cost from the increased number of processes, and decrease reliability from the increased number of processes. A flexible panel with an external connector can have, in a portion of a flexible substrate with no external connector mounted, resistance to a longitudinal bending load (in a direction perpendicular to the substrate surface of the flexible substrate). However, the flexible panel can have, in a mount area of the flexible substrate on which an external connector such as an FPC or TAB is mounted and in a portion continuous with the mount area, insufficient resistance to a longitudinal bending load occurring when the external connector is bent toward the back of the flexible substrate and also to a longitudinal bending load resulting from thermal distortion. Thus, an external connector may be detached from the mount area on the flexible substrate, or a connection failure may occur.

A drive located near an external connector on a flexible substrate can easily receive stress from a longitudinal bending load occurring when the external connector is bent toward the back of the flexible substrate and from a longitudinal bending load resulting from thermal distortion. A TFT as the drive may receive stress and degrade its characteristics, or a drive component in the drive such as an integrated circuit (IC) may be detached from the flexible substrate.

A radiation detection apparatus being awaited thus has sufficient resistance to a longitudinal bending load and avoids a lower production yield in the mounting process or lower reliability.

A photodetection device according to one or more embodiments of the present disclosure will now be described with reference to the drawings.

### Overall Structure

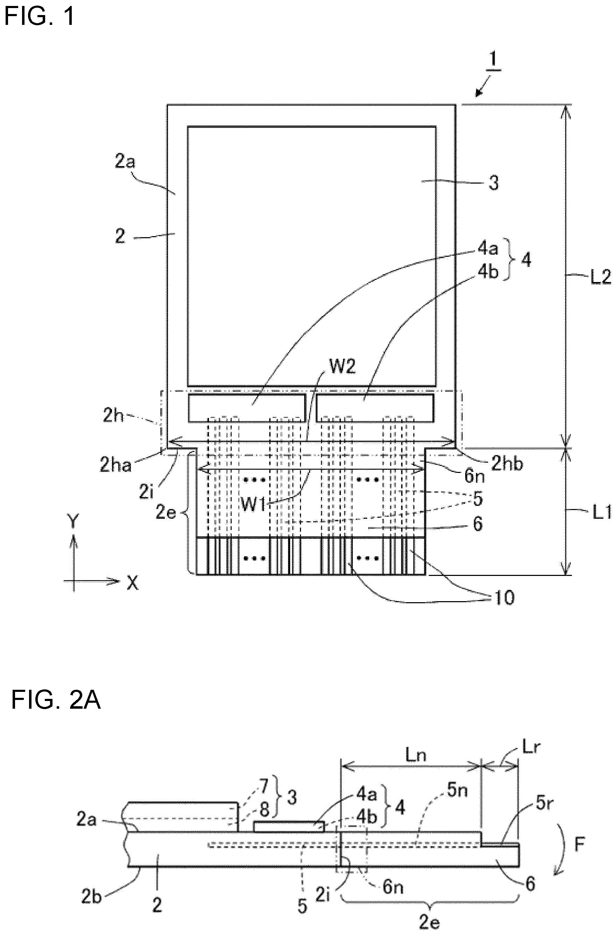

FIG. 1 is a plan view of a radiation detection apparatus 1 according to an embodiment of the present disclosure. FIG. 2A is a partially enlarged left side view of the radiation detection apparatus 1 in FIG. 1 illustrating a relay and a portion near the relay. The radiation detection apparatus 1 according to the present embodiment is used for, for example, obtaining X-rays emitted from an X-ray source and passing through a subject such as a human body as an electric signal corresponding to the amount of X-rays detected two-dimensionally (in a matrix). The radiation detection apparatus 1 according to the present embodiment is also used for displaying a two-dimensional electric signal as an image on a display.

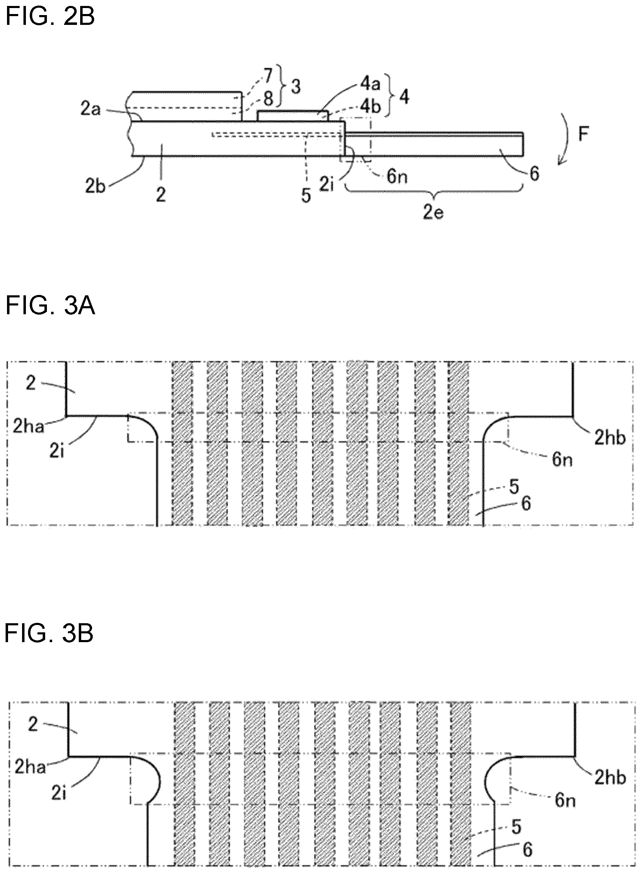

As illustrated FIG. 1, the radiation detection apparatus 1 includes a flexible substrate 2, a radiation detector 3 on the flexible substrate 2, a drive 4 for driving the radiation detector 3 on a side portion 2h of the flexible substrate 2 adjacent to the radiation detector 3, and a relay 6 for external connection on an extension 2e extending outward from the side portion 2h of the flexible substrate 2 and including multiple wiring layers 5 connected to the drive 4. The relay 6 includes a basal portion 6n (illustrated in FIGs. 2A, 2B, 3A, and 3B) adjacent to the side portion 2h. The basal portion 6n may have a width W1 (width in the direction parallel to the direction in which the side portion 2h extends) less than a width W2 of the side portion 2h. The side portion 2h has a width W1 of a side 2i (illustrated in FIGs. 3A and 3B) of the side portion 2h of the flexible substrate 2 as a plate with multiple sides, such as a rectangular plate. More specifically, the width W1 is the width of a straight line connecting a corner 2ha (illustrated in FIGs. 1, 3A, and 3B) and a corner 2hb (illustrated in FIGs. 1, 3A, and 3B) of the flexible substrate 2 in FIG. 1.

When the flexible substrate 2 has a shape with multiple sides such as a rectangle, the relay 6 may be located on each of the multiple sides, for example, on each of two sides or four sides. In the example described below, the relay 6 is located on the side portion 2h.

The width W1 of the basal portion 6n of the relay 6 may be about 50 to 100% or about 70 to 90% of the width W2 of the side portion 2h, or may be another value. The length L1 of the relay 6 in the extending direction as the extension 2e may be about 30 to 70% or about 40 to 60% of the length L2 of a first surface 2a excluding the extension 2e, or may be another value.

The above structure produces the effects described below. Unlike the known structure including a separate external connector connected to the end of the flexible substrate 2, the relay 6 for external connection is located on the extension 2e extending outward from the side portion 2h of the flexible substrate 2. The external connector can avoid being detached from the mount area of the external connector or can avoid having a connection failure. This eliminates the likelihood of, for example, any decrease in the production yield in mounting external connectors, any increase in the manufacturing cost from the increased number of processes, and any decrease in reliability from the increased number of processes. The relay 6 for external connection located on the extension 2e extending outward from the side portion 2h of the flexible substrate 2 includes the basal portion 6n with a width W1 adjacent to the side portion 2h being less than the width W2 of the side portion 2h. The relay 6 has lower resistance to a bending force F (refer to FIG. 2) in bending toward the back of the flexible substrate 2 and is more likely to bend than in the structure including the side portion 2h with the same width W2. The side portion 2h of the flexible substrate 2 on which the drive 4 is located can avoid lowering the resistance to the bending force F and is less likely to bend. The TFT as the drive 4 is less likely to receive stress and degrade its characteristics, or a drive component in the drive 4 such as an IC is less likely to be detached from the flexible substrate 2. The structure also produces the same or similar effects as when a longitudinal bending load results from thermal distortion. In other words, the structure produces the same or similar effects as described above when the relay 6 expanded and extended in an extending direction Y due to temperature increase is either bent or has a greater curvature and is exposed to a bending load or an increasing bending load.

The radiation detection apparatus 1 including the flexible substrate 2 can also be installed and used on a non-flat surface, such as a curved surface. For example, the radiation detection apparatus 1 may be installed along a three-dimensional curved surface on, for example, an upper body of a human.

The radiation detector 3 on the flexible substrate 2 is located on, for example, the first surface 2a of the flexible substrate 2. More specifically, the radiation detector 3 is located on the center of the first surface 2a and uses about 70 to 90% of the area of the first surface 2a in a plan view.

The drive 4 is located on the side portion 2h of the flexible substrate 2 adj acent to the radiation detector 3 to drive the radiation detector 3. The drive 4 may be located on the first surface 2a of the flexible substrate 2 or on a second surface 2b opposite to the first surface 2a. The drive 4 may be located on a surface opposite to a surface of the flexible substrate 2 where the radiation detector 3 is located. In the structure including the drive 4 on the second surface 2b of the flexible substrate 2, the drive 4 can have higher resistance to radiation such as X-rays applied toward the first surface 2a of the flexible substrate 2 on which the radiation detector 3 is mounted. As illustrated in FIG. 1, the structure may include multiple drives 4, or for example, drives 4a and 4b depending on the pixel density for photoelectric conversion of the radiation detector 3. The drive 4 may also be a thin film circuit including a TFT including a semiconductor layer of low-temperature polycrystalline silicon (LTPS) or a drive component such as an IC or an LSI circuit.

The area of the side portion 2h may be about 1 to 20% or about 5 to 10% of the area of the first surface 2a excluding the extension 2e, or may be another value.

As illustrated in FIG. 2A, the multiple wiring layers 5 may include an inner layer portion 5n, which is a layer portion in the extension 2e near the drive 4, and an exposed portion 5r, which is a portion of the extension 2e exposed from the extension 2e at a position opposite to the drive 4. In this structure, the inner layer portion 5n improves the resistance of the wiring layers 5 and the relay 6 to a longitudinal bending load when the relay 6 is bent toward the back of the flexible substrate 2. The inner layer portion 5n and the relay 6 also have higher resistance to a longitudinal bending load or to an increasing bending load resulting from thermal distortion. The inner layer portion 5n also improves the radiation resistance of the wiring layers 5 to radiation such as X-rays applied toward the first surface 2a of the flexible substrate 2 on which the radiation detector 3 is mounted. The exposed portion 5r can be used for external connection.

The inner layer portion 5n may include the wiring layers 5 with an upper portion having a thickness greater than the thickness of a lower portion in the wiring layers 5. This structure improves the radiation resistance of the wiring layers 5 to radiation such as X-rays applied toward the first surface 2a of the flexible substrate 2 on which the radiation detector 3 is mounted.

As illustrated in FIG. 2A, in the multiple wiring layers 5, the inner layer portion 5n has a length Ln greater than a length Lr of the exposed portion 5r. In this structure, the elongated inner layer portion 5n further improves resistance of the wiring layers 5 and the relay 6 to a longitudinal bending load when the relay 6 is bent toward the back of the flexible substrate 2. The inner layer portion 5n and the relay 6 also have still higher resistance to a longitudinal bending load or to an increasing bending load resulting from thermal distortion. The length Ln of the inner layer portion 5n may be about 60 to 90%, or about 70 to 80% of the overall length of the relay 6, or may be another value.

As illustrated in FIG. 2B, the relay 6 may not include the upper layer on the multiple wiring layers 5. In other words, the multiple wiring layers 5 may be exposed. In this structure, the relay 6 can have lower rigidity when being bent toward the back of the flexible substrate 2, and thus is more likely to bend.

The area of the relay 6 occupied by the multiple wiring layers 5 is greater than the area of the relay 6 unoccupied by the multiple wiring layers 5 in a plan view. In this structure, the multiple wiring layers 5 that are made of metal or an alloy having high mechanical strength and toughness can further improve the resistance of the relay 6 to a bending load. The area of the relay 6 occupied by the multiple wiring layers 5 may be more than 50% and about 90% or less, or about 70 to 90% in a plan view, or may be another value.

As illustrated in FIGs. 3A and 3B, the relay 6 may include both ends of the basal portion 6n curved in a plan view. In this structure, the relay 6 has still lower resistance to the bending force F when the relay 6 is bent toward the back of the flexible substrate 2 in use and can bend more easily. The side portion 2h of the flexible substrate 2 on which the drive 4 is located is less likely to have lower resistance to the bending force F and is less likely to bend. The TFT as the drive 4 may be further less likely to receive stress and degrade its characteristics, or a drive component in the drive 4 such as an IC is further less likely to be detached from the flexible substrate 2. The structure also produces the same or similar effects as when a longitudinal bending load results from thermal distortion.

FIG. 3A illustrates a relay 6 including a basal portion 6n including, on both ends, side surfaces with internal corners curved and continuously connected to a side 2i. FIG. 3B illustrates a relay 6 including a basal portion 6n including, on both ends, side surfaces curved inward and connected to a side 2i. In each of the structures, the relay 6 is more likely to bend, with the side portion 2h being less likely to bend.

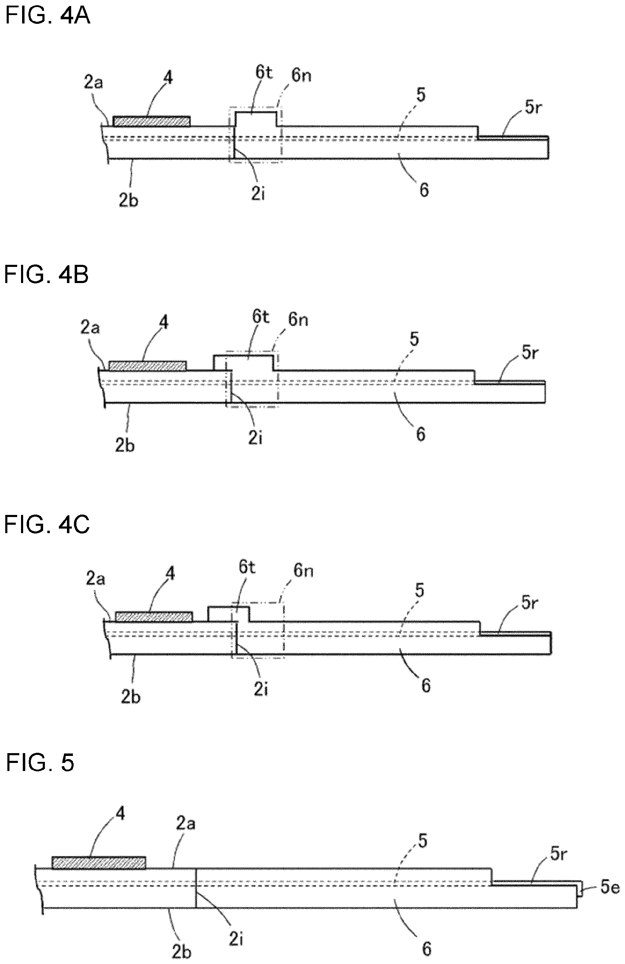

As illustrated in FIGs. 4A, 4B, and 4C, the relay 6 may include the basal portion 6n having a greater thickness than the other portion. In this structure, the relay 6 can include the basal portion 6n reinforced to have higher strength and thus can be bent at a position nearer the distal end of the relay 6 when the relay 6 is bent toward the back of the flexible substrate 2 in use. With the side portion 2h being further less likely to bend, the TFT as the drive 4 may be further less likely to receive stress and degrade its characteristics, or a drive component in the drive 4 such as an IC is further less likely to be detached from the flexible substrate 2.

FIG. 4A illustrates a relay 6 including a basal portion 6n including a thicker portion 6t. FIG. 4B illustrates a structure including a thicker portion 6t with an extension toward a side portion 2h. This structure reinforces the side portion 2h to allow the side portion 2h to be further less likely to bend. FIG. 4C illustrates a structure including a thicker portion 6t with an extension 2e having a length greater than the other portion and extending to the side portion 2h. This structure further reinforces the side portion 2h to allow the side portion 2h to be further less likely to bend. The thicker portion 6t may have a thickness greater than and up to about 1.5 times the thickness of the other portion of the relay 6, but may be another value. The thicker portion 6t may have a length of about 3 to 20%, or about 5 to 15% of the length of the other portion of the relay 6, or may be another value. The thicker portion 6t may be a thicker basal portion 6n of the relay 6, or may be the basal portion 6n including another layer made of the same material as or a material different from the relay 6.

FIG. 5 illustrates a relay 6 including multiple wiring layers 5 extending on its distal end surface. In this structure, the multiple wiring layers 5 extend to an extension 5e to increase the bonding area with a conductive connector such as an ACF or solder for connecting the wiring of an external connector such as an FPC to an exposed portion 5r of the multiple wiring layers 5. This structure increases the resistance of the connecting portion of the conductive connector to a vertical bending load.

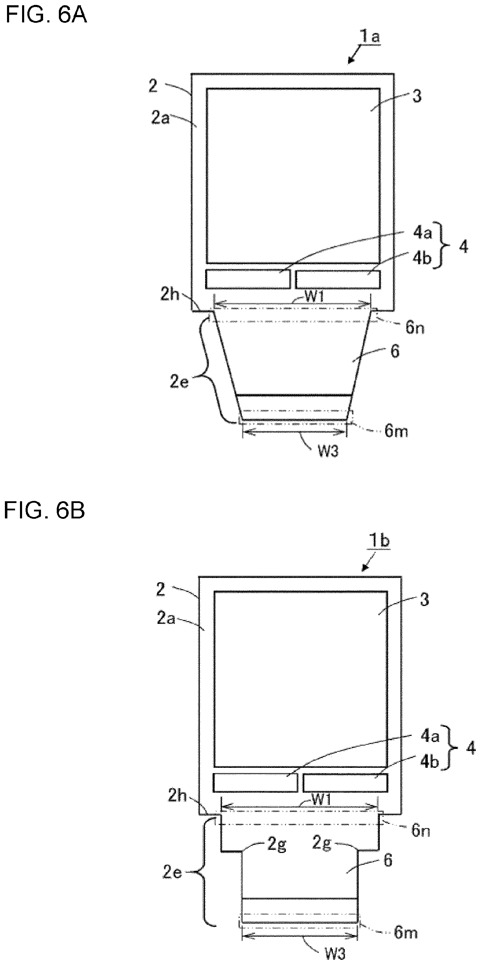

As illustrated in FIGs. 6A and 6B (multiple wiring layers 5 are not illustrated), a relay 6 may include a basal portion 6n having a width W1 greater than a width W3 of a distal end 6m opposite to the basal portion 6n. In this structure, the relay 6 has slightly lower overall rigidity and is more likely to bend, with a side portion 2h being less likely to bend. FIG. 6A illustrates a relay 6 with a width gradually decreasing from a basal portion 6n toward its distal end. FIG. 6B illustrates a relay 6 including steps 2g between a basal portion 6n and its distal end, with the width of the relay 6 changing stepwise between widths W1 and W3.

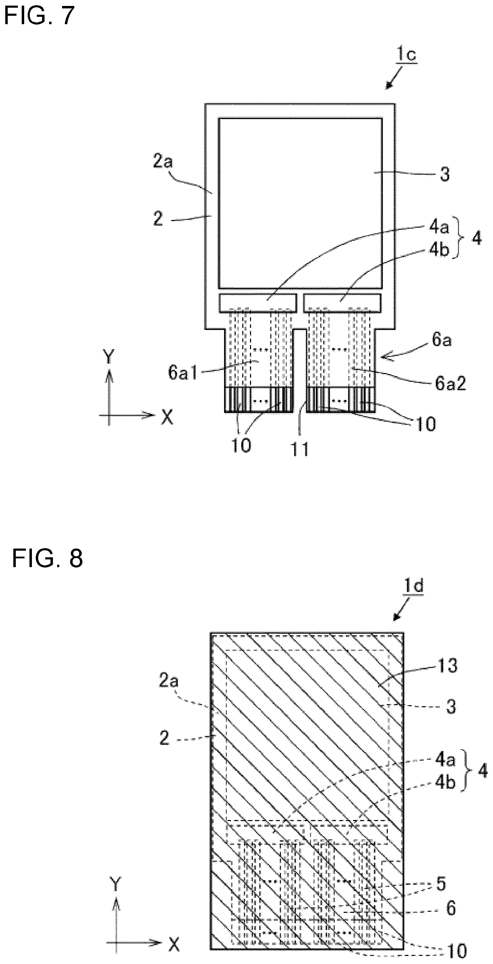

As illustrated in FIG. 7, a relay 6 may include multiple portions divided in a direction parallel to a side portion 2h. In this structure, each portion of the relay 6 has lower rigidity and is more likely to bend, with the side portion 2h being less likely to bend. The multiple portions of the relay 6 may be about two or more portions, or specifically, five or fewer portions, but may be any number of portions of the relay 6 other than these values.

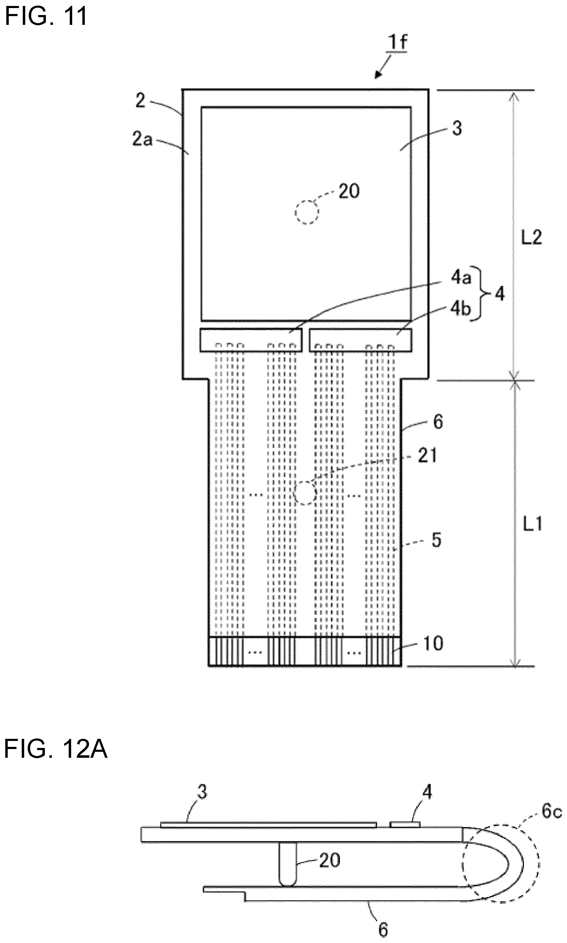

As illustrated in FIG. 11, a radiation detection apparatus 1f may include a relay 6 with a length L1 in its extending direction greater than a length L2 in an extending direction of a portion (body) of the flexible substrate 2 other than the relay 6. When the radiation detection apparatus 1 is used with the relay 6 bent opposite to the radiation detector 3 on the flexible substrate 2, the bent portion of the relay 6 is less likely to have a lower curvature radius. More specifically, the relay 6 is less likely to include the bent portion being folded and can include the bent portion with a higher curvature radius. This structure thus reduces the stress constantly applied to the bent portion and reduces cracks or other defects in the bent portion that may occur from deterioration over time. The length L1 may be greater than and up to twice the length L2, but may be in another range of values.

As further illustrated in FIG. 11, the flexible substrate 2 may include protrusions 20 and 21 on a surface opposite to a surface of the flexible substrate 2 where the radiation detector 3 is located. The protrusions 20 and 21 function as restrictors that restrict the degree by which the bent portion 6c of the relay 6 (illustrated in FIGs. 12A to 12D) is bent. The protrusion 20 is located on the body of the flexible substrate 2. The protrusion 21 is located on the relay 6 on the flexible substrate 2. At least one of the protrusions 20 and 21 may be provided. When the radiation detection apparatus 1 is used with the relay 6 bent opposite to the radiation detector 3 on the flexible substrate 2, as illustrated in FIGs. 12A to 12D, the bent portion 6c of the relay 6 is less likely to have a lower curvature radius with the distal end of the protrusion 20 in contact with the relay 6 or with the distal end of the protrusion 21 in contact with the body. More specifically, the bent portion 6c is less likely to be folded and can have a higher curvature radius. This structure thus reduces the stress constantly applied to the bent portion 6c and reduces cracks or other defects in the bent portion 6c that may occur from deterioration over time.

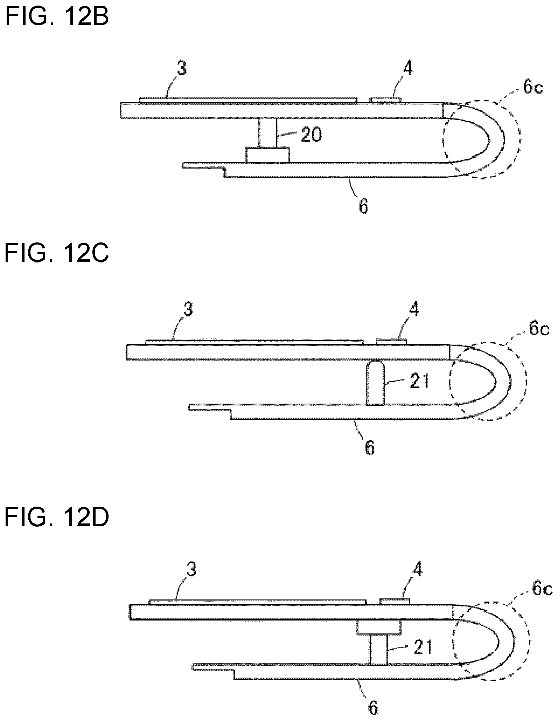

FIG. 12Aillustrates a structure including a flexible substrate 2 including, on the body, a protrusion 20 with a distal end including a convex curved surface, such as a partially spherical surface. This structure can reduce friction between the distal end of the protrusion 20 and the relay 6. When, for example, the relay 6 deforms and extends in the extending direction by, for example, thermal expansion, the distal end of the protrusion 20 is less likely to be caught on the relay 6. FIG. 12B illustrates a structure including a flexible substrate 2 including, on the body, a protrusion 20 with a widened distal end. In this structure, the protrusion 20 can effectively function as a support to reliably maintain the space between the body of the flexible substrate 2 and the relay 6. This structure maintains the high curvature radius of the bent portion 6c. FIG. 12C illustrates a structure including a flexible substrate 2 including, on the relay 6, a protrusion 21 with a distal end including a convex curved surface, such as a partially spherical surface. This structure has the same or similar effects as the structure illustrated in FIG. 12A. FIG. 12D illustrates a structure including a flexible substrate 2 including, on the relay 6, a protrusion 21 with a widened distal end. This structure has the same or similar effects as the structure in FIG. 12B.

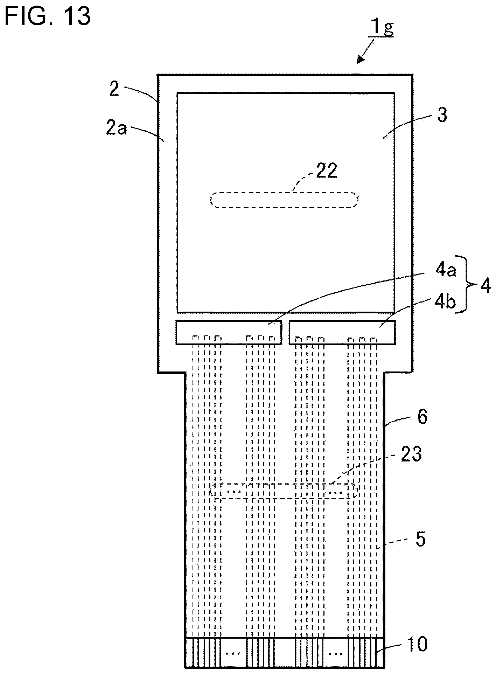

As illustrated in FIG. 13, a radiation detection apparatus 1g may include ridges 22 and 23 on a surface opposite to a surface of the flexible substrate 2 where the radiation detector 3 is located. The ridges 22 and 23 function as restrictors that restrict the degree by which the bent portion 6c of the relay 6 is bent. The ridge 22 is located on the body of the flexible substrate 2. The ridge 23 is located on the relay 6 on the flexible substrate 2. At least one of the ridge 22 or the ridge 23 may be provided. When the radiation detection apparatus 1 is used with the relay 6 bent opposite to the radiation detector 3 on the flexible substrate 2, the bent portion 6c of the relay 6 is less likely to have a lower curvature radius. More specifically, the bent portion 6c is less likely to be folded and can have a higher curvature radius. This structure thus reduces the stress constantly applied to the bent portion 6c and reduces cracks or other defects in the bent portion 6c that may occur from deterioration over time. The ridges 22 and 23 may extend in a direction intersecting with the extending direction. The angle of intersection of the ridges 22 and 23 intersecting with the extending direction may be about 70 to 110°, about 80 to 100°, or about 90°, but may be in another range of values or may be another value.

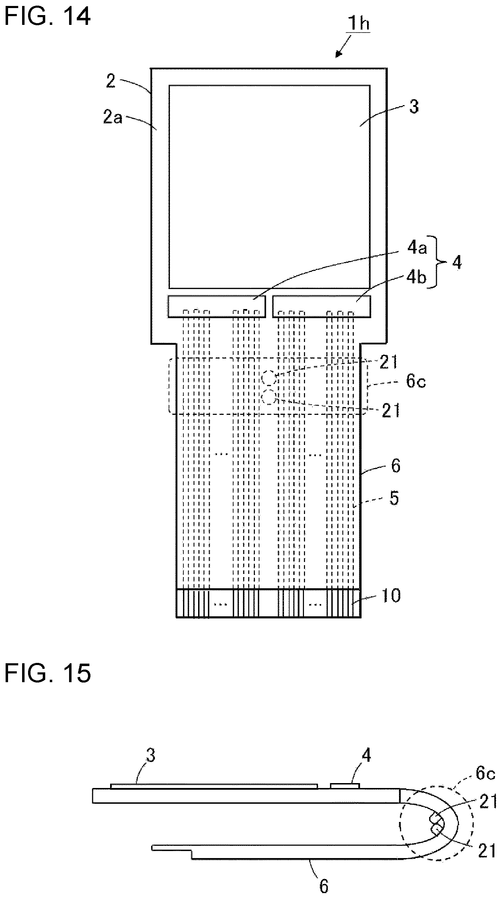

As illustrated in FIG. 14, a radiation detection apparatus 1h may include, in the bent portion 6c of the relay 6, multiple protrusions 21 adjacent to each other in the extending direction of the relay 6. When the radiation detection apparatus 1 is used with the relay 6 bent opposite to the radiation detector 3 on the flexible substrate 2, as illustrated in FIG. 15, the bent portion 6c is less likely to have a lower curvature radius with the multiple protrusions 21 in contact with each other in the bent portion 6c of the relay 6. The multiple protrusions 21 more effectively function as restrictors that restrict the degree by which the bent portion 6c is bent. The height of each of the multiple protrusions 21 can be less than that in the structure in FIG. 11 by at least half. The distance between the multiple protrusions 21 adjacent to each other may be about 0.1 to 10 mm, but may be in another range of values.

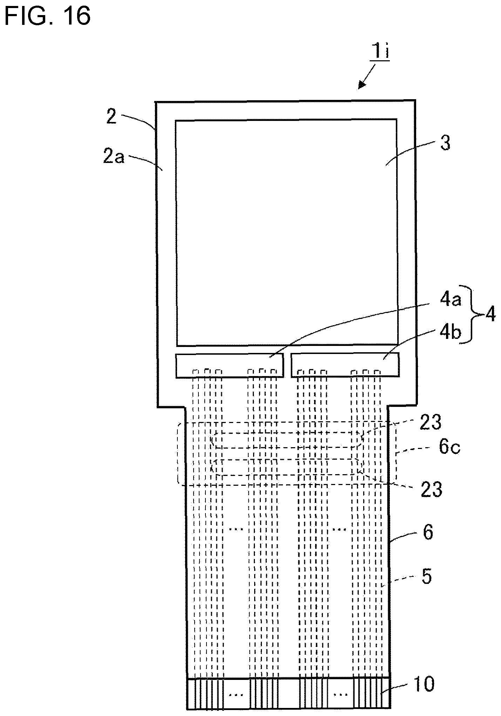

As illustrated in FIG. 16, a radiation detection apparatus 1i includes, in the bent portion 6c of the relay 6, multiple ridges 23 adjacent to each other in the extending direction of the relay 6. When the radiation detection apparatus 1 is used with the relay 6 bent opposite to the radiation detector 3 on the flexible substrate 2, the bent portion 6c is thus less likely to have a lower curvature radius with the multiple ridges 23 in contact with each other in the bent portion 6c of the relay 6. The multiple ridges 23 more effectively function as restrictors that restrict the degree by which the bent portion 6c is bent. The height of each of the multiple ridges 23 can be less than that in the structure in FIG. 11 by at least half. The distance between the multiple ridges 23 adjacent to each other may be about 0.1 to 10 mm, but may be in another range of values.

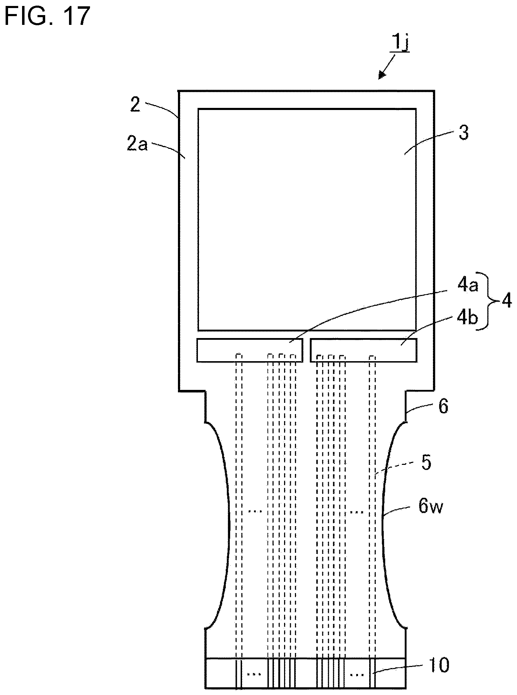

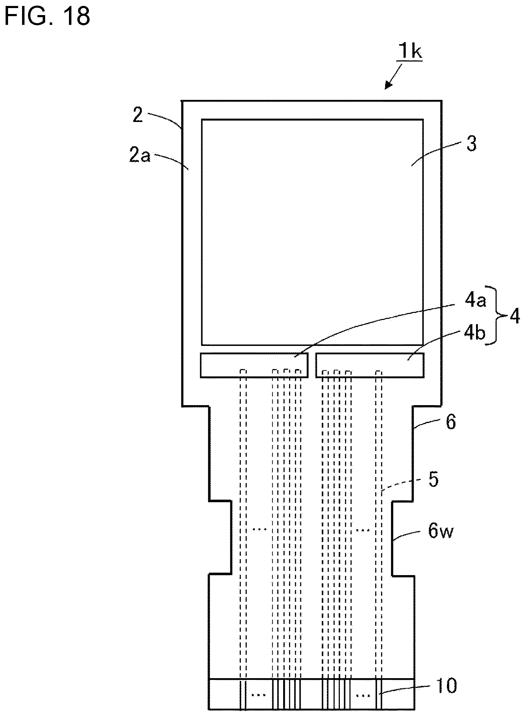

As illustrated in FIG. 17, a radiation detection apparatus 1j may include, in the middle of the relay 6, a narrower portion 6w in a direction perpendicular to the extending direction. In this structure, the narrower portion 6w in the relay 6 is twisted easily about the axis in the extending direction. The radiation detection apparatus 1j can be easily incorporated in peripheral constituent components or devices that are in a complicated arrangement. The narrower portion 6w may not be curved, and may be linear as illustrated for a radiation detection apparatus 1k in FIG. 18. The width of the narrower portion 6w in the direction perpendicular to the extending direction may be at least half and less than the width of the portion of the relay 6 other than the narrower portion 6w, but may be in another range of values. The length of the narrower portion 6 in the extending direction may be about 10 to 90%, or about 30 to 70% of the length of the relay 6, but may be in another range of values.

### Flexible Substrate 2

The flexible substrate 2 is substantially rectangular in a plan view. The flexible substrate 2 is made of a flexible material. Examples of such flexible materials include a polyimide resin, a polyamide-imide resin, polyester resins such as polyethylene terephthalate (PET) and polyethylene naphthalate (PEN), a polyacrylonitrile resin, a polymethyl methacrylate resin, a polycarbonate (PC) resin, a polyethersulfone (PES) resin, a polyamide resin, a cycloolefin resin, a polystyrene resin, and a polyvinyl chloride resin. More specifically, one of a polyimide resin, a polyamide-imide resin, or PET with a low coefficient of thermal expansion may be used.

The flexible substrate 2 may have a thickness of 5 to 200 µm inclusive. The flexible substrate 2 made of, for example, a polyimide resin as described above may have a thickness of 5 to 200 µm inclusive to have intended flexibility (or bending rigidity) and tensile strength.

The extension 2e may be thinner than the body of the flexible substrate 2. In this structure, the extension 2e to be bent in use can be bent easily, whereas the body of the flexible substrate 2 is less likely to bend. This structure is less likely to have large stress applied to the boundary between the extension 2e and the body of the flexible substrate 2. In this structure, the thickness of the extension 2e may be 10 to 100% inclusive of the thickness of the body of the flexible substrate 2, but may be in another range of values.

The extension 2e may also be thinner than the body of the flexible substrate 2 gradually or stepwise toward the distal end. In this structure, when the extension 2e is bent in use, the extension 2e is more likely to bend, whereas the body of the flexible substrate 2 is further less likely to bend. This structure is further less likely to have large stress applied to the boundary between the extension 2e and the body of the flexible substrate 2.

### Radiation Detector 3

The radiation detector 3 is located on the first surface 2a, which is a main surface of the flexible substrate 2. The radiation detector 3 includes a scintillator layer 7 as an X-ray converter to convert incident X-rays into fluorescence, and a photoelectric converter 8 located on the first surface 2a to convert the fluorescence from the scintillator layer 7 into an electric signal. The photoelectric converter 8 includes multiple photoelectric conversion elements arranged in a matrix in a first direction X (e.g., a row direction) and a second direction Y (e.g., a column direction) perpendicular to the first direction on the first surface 2a. For example, the photoelectric conversion elements may be photodiodes. Each photoelectric conversion element is electrically connected to the drive 4 with the multiple wiring layers 5 located on the first surface 2a of the flexible substrate 2 or in an inner layer of the flexible substrate 2. The multiple wiring layers 5 include, for example, multiple scanning signal lines (gate signal lines), multiple data signal lines (source signal lines), multiple signal output lines, and power supply lines (bias voltage lines). Each photoelectric conversion element includes a TFT for outputting an electric charge (signal) generated in the photoelectric conversion element with a switching operation. A scanning signal line is connected to a gate electrode of the TFT. A data signal line connects a lower electrode of the photoelectric conversion element and a source electrode of the TFT. A drain electrode of the TFT is connected to a signal output line for outputting a signal. Each photoelectric conversion element includes, for example, a PIN photodiode having an upper electrode connected to a power supply line.

### Scintillator Layer 7

Examples of the material for the scintillator layer 7 include cesium iodide (CsI):sodium (Na), cesium iodide (CsI):thallium (Tl), sodium iodide (NaI), and gadolinium oxysulfide (Gd₂O₂S), which are used as appropriate for the use or intended characteristics of the layer. CsI:Na indicates CsI containing a trace amount of Na. The resolution characteristics of the scintillator layer 7 can be improved by, for example, forming grooves with a method such as dicing, and depositing the layer to have a columnar structure with vapor deposition. For the scintillator layer 7 formed using a CsLTl film or a CsI:Na film that can deteriorate greatly with humidity, a reflective layer may be formed on the scintillator layer 7 to increase the utilization efficiency of fluorescence generated from the scintillator layer 7. The scintillator layer 7 has a thickness of, for example, about 200 to 600 µm.

The reflective layer reflects a portion of the fluorescence emitted from the scintillator layer 7 and traveling opposite to the photoelectric converter 8 to cause the reflected portion to reach the photoelectric converter 8 and increase the amount of fluorescence. The material for the reflective layer may be a metal with a high fluorescence reflectance, such as Al or an Al alloy. The reflective layer may be formed on the scintillator layer with a thin film formation method such as chemical vapor deposition (CVD).

### Drive 4

In the present embodiment, the drive 4 performs control to activate and deactivate the multiple photoelectric conversion elements in the radiation detector 3. The drive 4 includes two drives 4a and 4b for turning on and off the TFT included in each photoelectric conversion element. The two drives 4a and 4b may be semiconductor IC elements. The semiconductor IC elements 4a and 4b, which are also referred to as IC chips, are mounted on the flexible substrate 2 and connected to the wiring layers 5 with a mounting method such as a chip-on-glass (COG) method. In some embodiments, the drive 4 may be a thin film circuit such as a TFT including a semiconductor layer, such as low-temperature polycrystalline silicon (LTPS).

### Relay 6

The relay 6 includes, at the distal end, multiple connection pads 10 that are connected to the respective multiple wiring layers 5. The connection pads 10 are located on the exposed portion 5r of the wiring layers 5. Each of the connection pads 10 can be connected to an FPC connected to, for example, a central processing unit (CPU), with, for example, an ACF.

In the present embodiment, the radiation detection apparatus 1 includes the radiation detector 3 and the drive 4 on the first surface 2a of the flexible substrate 2 and includes the relay 6 with the extension, and has high resistance to a bending load, thus lowering the likelihood of any decrease in the production yield and in the reliability during manufacture. A bending load occurs differently for the use of the product. For example, a bending load occurs when the relay 6 is bent toward the back of the flexible substrate 2 in use, when the radiation detection apparatus is installed on a non-flat surface such as a curved surface, or when the relay 6 expands thermally due to temperature increase after the radiation detection apparatus is installed.

FIG. 7 is a plan view of a radiation detection apparatus 1c according to another embodiment of the present disclosure. The same reference signs denote the components corresponding to those in the above embodiments and will not be described repeatedly. In the present embodiment, the radiation detection apparatus 1c includes a radiation detector 3, a drive 4, and a relay 6a. The radiation detector 3 and the drive 4 have the same or similar structures as those in the radiation detection apparatus 1 in the above embodiments. In the present embodiment, the radiation detection apparatus 1c includes a slit 11 in the middle of the relay 6a in a first direction X, by which the relay 6a is divided into a first relay 6a1 and a second relay 6a2. The slit 11 can be easily formed by, for example, stamping.

The radiation detection apparatus 1c according to the present embodiment allows connection pads 10 in the first relay 6a1 and connection pads 10 in the second relay 6a2 to be connected individually to, for example, an FPC, TAB, or a PWB to facilitate positioning in the environment inside the housing with a high degree of positioning freedom. This structure can have fewer manufacturing processes and a higher yield than the structure including the first relay 6a1 and the second relay 6a2 as separate components such as FPCs.

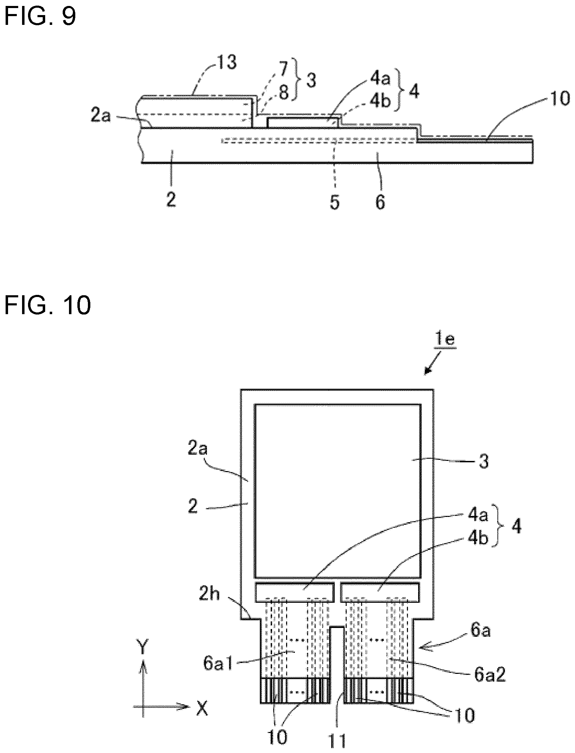

FIG. 8 is a plan view of a radiation detection apparatus 1d according to still another embodiment of the present disclosure. FIG. 9 is a partially enlarged left side view of the radiation detection apparatus 1d in FIG. 8 illustrating a relay 6 and a portion near the relay 6. The components corresponding to those in the above embodiments are given the same reference numerals and will not be described repeatedly. In the present embodiment, the radiation detection apparatus 1b includes a radiation detector 3, a drive 4, and a relay 6, and further a protective film 13. The radiation detector 3, the drive 4, and the relay 6 have the same or similar structures as those in the radiation detection apparatus 1 in the above embodiments. The protective film 13 is attached to cover the entire surfaces of the radiation detector 3, the drive 4, and the relay 6 after the radiation detector 3 and the drive 4 are incorporated onto the flexible substrate 2 for improved handling and surface protection.

The protective film 13 may function to resist radiation, in addition to protecting the surface against dirt and dust. For example, the protective film 13 may have a three-layer structure including a radiation shielding layer, a heat insulating layer, and a heat diffusion layer stacked in this order. In this structure, the radiation shielding layer is made of, for example, lead, tungsten, or stainless steel, and absorbs backscattered rays of radiation and prevents radiation through the subject from reaching an electric processing section such as the drive 4. The heat insulating layer is made of, for example, urethane or foamed polyethylene, and reduces heat transfer between the radiation detector 3 and the drive 4. The heat diffusion layer is made of a material having higher thermal conductivity than the heat insulating layer, and diffuses heat from the heat insulating layer.

The structure according to the embodiment illustrated in FIG. 8 includes the single slit 11 in the center of the relay 6 to divide the relay 6 into the two first relays 6a1 and 6a2. In still another embodiment of the present disclosure, the relay 6a may include two or more slits 11. The relay 6 in a plan view is rectangular and has a narrower width than the radiation detector 3 and the drive 4. However, the relay 6 can have another shape formed by, for example, shaving, cutting, and punching, as appropriate for the size and shape of components to be mounted, component characteristics such as temperature characteristics including heat generation, electromagnetic characteristics, and optical characteristics, and installation environment of components to be mounted. The relay 6 may be mounted with deformation including curving toward an object to be mounted, or without deformation to achieve the high degree of design freedom.

FIG. 10 is a plan view of a radiation detection apparatus 1e according to still another embodiment of the present disclosure. In the present embodiment with the structure illustrated in FIG. 7, the radiation detection apparatus 1e includes a relay 6 with a slit 11 having a shorter length in the extending direction of the relay 6 than in the extending direction. In this structure, the relay 6 can include the bent portion at a position nearer the distal end of the relay 6. With the side portion 2h being less likely to bend, the TFT as the drive 4 may be further less likely to receive stress and degrade its characteristics, or a drive component in the drive 4 such as an IC is further less likely to be detached from the flexible substrate 2.

In each of the above embodiments, the radiation detection detector includes the radiation detector 3 and the drive 4 on the first surface 2a of the flexible substrate 2 and includes the relay 6 on the extension from the flexible substrate 2. The relay 6 has high resistance to a bending load, thus lowering the likelihood of any decrease in the production yield and in the reliability during manufacture.

The radiation detection apparatus according to one or more embodiments of the present disclosure includes the relay for external connection located on the extension extending outward from the side portion of the flexible substrate, unlike in a known structure including a separate external connector connected to an end of a flexible substrate. The external connector can avoid being detached from the mount area of the external connector or can avoid having a connection failure. This eliminates the likelihood of, for example, any decrease in the production yield in mounting external connectors, any increase in the manufacturing cost from the increased number of processes, and any decrease in reliability from the increased number of processes.

Although embodiments of the present disclosure have been described in detail, the present disclosure is not limited to the embodiments described above, and may be changed or varied in various manners without departing from the spirit and scope of the present disclosure. The components described in the above embodiments may be entirely or partially combined as appropriate unless any contradiction arises.

The present disclosure may be embodied in various forms without departing from the spirit or the main features of the present disclosure. The embodiments described above are thus merely illustrative in all respects. The scope of the present disclosure is defined not by the description given above but by the claims. Any variations and alterations contained in the claims fall within the scope of the present disclosure.

### REFERENCE SIGNS

- 1, 1a to 1k: radiation detection apparatus
- 2: flexible substrate
- 2a: first surface
- 2e: extension
- 2h: side portion
- 2i: side
- 3: radiation detector
- 4: drive
- 4a: first drive
- 4b: second drive
- 5: wiring layers
- 5n: inner layer portion
- 5r: exposed portion (connection pad)
- 6: relay
- 6m: distal end
- 6n: basal portion
- 6t: thicker portion
- 7: scintillator layer
- 8: photoelectric converter
- 10: connection pad
- 11: slit
- 13: protective film

## Claims

1. A radiation detection apparatus, comprising:
a flexible substrate;
a radiation detector located on the flexible substrate;
a drive located on a side portion of the flexible substrate and adjacent to the radiation detector, the drive being configured to drive the radiation detector; and
a relay located on an extension of the flexible substrate, the extension extending outward from the side portion to provide an external connection, the relay including a plurality of wiring layers connected to the drive.

2. The radiation detection apparatus according to claim 1, wherein
the relay includes a basal portion adjacent to the side portion, and the basal portion has a width less than a width of the side portion.

3. The radiation detection apparatus according to claim 1 or claim 2, wherein the relay is a plurality of relays, and
the flexible substrate includes the plurality of relays.

4. The radiation detection apparatus according to any one of claims 1 to 3, wherein
the drive is on a surface opposite to a surface of the flexible substrate where the radiation detector is located.

5. The radiation detection apparatus according to any one of claims 1 to 4, wherein
the plurality of wiring layers includes an inner layer portion in the extension adjacent to the drive, and an exposed portion exposed from the extension at a position opposite to the drive.

6. The radiation detection apparatus according to claim 5, wherein
in the plurality of wiring layers, the inner layer portion has a length greater than a length of the exposed portion.

7. The radiation detection apparatus according to claim 5 or claim 6, wherein
the inner layer portion includes an upper portion and a lower portion in the plurality of wiring layers, and the upper portion has a thickness greater than a thickness of the lower portion.

8. The radiation detection apparatus according to any one of claims 1 to 7, wherein
an area of the relay occupied by the plurality of wiring layers is greater than an area of the relay unoccupied by the plurality of wiring layers in a plan view.

9. The radiation detection apparatus according to any one of claims 1 to 8, wherein
the relay includes a basal portion adjacent to the side portion, and the basal portion includes two ends curved in a plan view.

10. The radiation detection apparatus according to any one of claims 1 to 9, wherein
the relay includes a basal portion having a thickness greater than a thickness of another portion of the relay.

11. The radiation detection apparatus according to any one of claims 1 to 10, wherein
the relay includes a basal portion having a width greater than a width of a distal end of the relay opposite to the basal portion.

12. The radiation detection apparatus according to any one of claims 1 to 11, wherein
the relay includes a plurality of portions divided in a direction parallel to the side portion.

13. The radiation detection apparatus according to any one of claims 1 to 12, wherein
the relay has a length greater than a length of a portion of the flexible substrate other than the relay in an extending direction.

14. The radiation detection apparatus according to any one of claims 1 to 13, wherein
the flexible substrate includes a protrusion or a ridge on a surface opposite to a surface of the flexible substrate where the radiation detector is located.

15. The radiation detection apparatus according to claim 14, wherein
a plurality of the protrusions is located in the relay, and
the plurality of protrusions is located adjacent to one another in an extending direction of the relay.

16. The radiation detection apparatus according to claim 14, wherein
a plurality of the ridges is located in the relay, and the plurality of ridges extends in a direction intersecting with an extending direction of the relay, and
the plurality of ridges is located adjacent to one another in the extending direction of the relay.

17. The radiation detection apparatus according to any one of claims 1 to 16, wherein
the flexible substrate includes one of a polyimide resin, a polyamide-imide resin, or polyethylene terephthalate.

18. The radiation detection apparatus according to any one of claims 1 to 17, wherein the flexible substrate has a thickness of 5 to 200 µm inclusive.
